**Europäisches Patentamt**

**European Patent Office**

**Office européen des brevets**

(11) Publication number : **0 505 303 A1**

## (12) EUROPEAN PATENT APPLICATION

(21) Application number : **92480021.2**

(22) Date of filing : **11.02.92**

(51) Int. Cl.⁵ : **G11B 5/72**

(30) Priority : **19.03.91 US 671553**

(43) Date of publication of application :
**23.09.92 Bulletin 92/39**

(84) Designated Contracting States :
**DE FR GB**

(71) Applicant : **International Business Machines Corporation**
**Old Orchard Road**
**Armonk, N.Y. 10504 (US)**

(72) Inventor : **Bowen, Arlen John**
**3114 Knoll Lane N.W.**
**Rochester, Minnesota 55901 (US)**

Inventor : **Erickson, David Lawrence**
**4414 Cambridge Lane N.W.**
**Rochester, Minnesota 55901 (US)**
Inventor : **Mayerle, James Joseph**
**1637 Camelback Court N.E.**
**Rochester, Minnesota 55906 (US)**
Inventor : **Piltingsrud, Douglas Howard**
**1851 22nd Avenue N.E.**
**Rochester, Minnesota 55906 (US)**
Inventor : **Viswanathan,Kannimangalam Venitasubramnyam**
**4050 Alberta Drive N.E.**
**Rochester, Minnesota 55906 (US)**

(74) Representative : **Vekemans, André**
**Compagnie IBM France Département de Propriété Intellectuelle**
**F-06610 La Gaude (FR)**

(54) **Lubricant for magnetic recording disks.**

(57)   A thin film magnetic recording disk is described having a bifunctional lubricant system (14) (also called a mixed phase or mobile/immobile lubricant system). The lubricant system comprises a first immobile or bonded lubricant layer whose molecules (20) are bonded to the surface of a magnetic recording layer, or in the alternative are bonded to the surface of a carbon based layer (13) that overlies and protects the magnetic recording layer. The molecules (22) of a second mobile or unbonded lubricant layer adhere to the molecules of the bonded lubricant layer by virtue of a similar molecular backbone construction. The bonded lubricant layer preferably comprises a thermally bonded layer of a chemically active, mono-functionalized, perfluoropolypropylene (PFPP) ether. The chemically active end group(s) of the PFPP ether molecules bond to the underlying layer. The mobile lubricant is selected to provide molecules having chemically inactive end groups, but having a backbone that is identical to, or substantially similar to, the backbone of the molecules within the immobile lubricant layer. As a result, the mobile lubricant molecules preferentially adhere to the backbone of the immobile lubricant molecules in a generally mobile fashion, to thereby form a bifunctional disk lubricant system.

FIG. 2.

This invention relates to magnetic data recording media, and more specifically to lubricant systems for magnetic recording media such as thin film magnetic recording disks of the hard or rigid type.

Reliability requirements for direct access storage devices (DASD) continue to grow, generally in response to user requirements, and in response to competition among the various DASD manufactures. High reliability requires that the DASD units operate in a wide range of operating environments, such as in hot, cool, wet and dry conditions, conditions of unfriendly chemicals and/or dust, etc. In order to satisfy customer expectations over a DASD lifetime of from 5 to 7 years, and perhaps longer, the designer of a DASD device must meet rigorous specification requirements. A major requirement is that of the disk lubricant system.

Disk lubricant systems must perform in a satisfactory manner relative to parameters such as lubricant spin off, chemical degradation, thermal degradation, lubricant evaporation, lubricant reactivity, head/disk stiction, compatibility of the lubricant with materials that are outgassed or internally generated as the DASD unit operates, moisture resistance, and mechanical head/disk wear.

The use of disk lubricants is well known in the art. For example, perfluoropolyether (PEP) materials are widely used as lubricants for thin film magnetic recording disks. These lubricants differ from one another in parameters such as molecular weight, backbone composition and chemically reactive end groups. The disk file designer generally selects from available lubricant materials, based upon factors such as chemical stability, low volatility, low head stiction, low read-write head/disk wear, and long life of the lubricant layer.

In general, trade offs must be made between the various lubricant parameters. For example, if the molecular weight of the lubricant is increased, the lubricant's volatility is desirably decreased, but the viscosity of the lubricant is undesirably increased, perhaps resulting in stiction. As another example, if the number of difluoromethylene ($CF_2O$) units in the lubricant molecule is increased, the lubricant's viscosity versus temperature property is improved, but the chemical stability of the lubricant is generally decreased.

Homopolymers such as perfluoropolypropylene ether (the brand Demnum by Daikin) and perfluoroisopropylene ether (the brand Krytox by Dupont de Nemours) provide high chemical stability because they do not include $CF_2O$ groups within the molecule, and because the backbone of these molecules are made up of perfluoropolypropylene, as distinguished from perfluoropolyethylene.

Perfluoropolyethylene ether lubricants are the commonly used lubricants in rotating disk storage memories. These lubricants possess the desirable property of chemical inertness, low surface tension, low volatility and they are moisture repellant. However, these lubricants have serious drawbacks in that they they are not as chemically inert as is needed, they are too volatile, they are not water repellant enough, and as used they contribute to stiction, wear and spin-off problems. All of these characteristics increase interference at the head disk interface, and can eventually lead to the complete failure of this interface.

Duplex lubricant coatings on a magnetic recording layer are generally known in the art.

The publication IEEE Transactions on Magnetics, Vol. MAG-23, No. 1, January 1987, at pages 33-35 describes the use of duplex fluorocarbon films, one film being chemically and permanently bonded to the media surface, and the other film being a normally applied lubricant that is overcoated onto the primed disk surface. This publication describes three perfluoropolyether classes of compounds that are available for use as topical lubricants, i.e. (a) linear chain polymers (the Fomblin Z brand), (b) branched chain polymers (the Krytox 143 and Fomblin Y brands), and (c) functionally reactive linear chain polymers (the Fomblin Z Deal, Fomblin Z Dol and Fomblin Z Disoc brands). The disks described in this publication were coated with a type (c) reactive fluorocarbon, and were then further coated with a small amount of a type (a) perfluoropolyether. It is pointed out that the reactive lubricant, when chemically reacted with the disk surface, has similarities to solid lubricants, and that the top lubricant has properties typical of liquid lubricants. The overcoated fluorocarbon lubricant was stated to have no chemically reactive groups, and was known to be chemically inert.

- B -

Document GB 2,155,810A describes magnetic recording medium comprising a non-magnetic substrate, a magnetic recording ferromagnetic film on the substrate, and a topcoat layer formed on the surface of the recording layer, the topcoat layer comprising a radiation curable antioxident and a lubricant.

United States Patent 4,642,246 describes a process for lubricating a magnetic disk comprising contacting the disk with a functionalized terminated polymeric lubricant, and then heating the lubricant so as to covalently bond the functional group to the surface polymers or metal oxides of the disk. The unreacted lubricant residue is then removed and replaced with a conventional non functionalized lubricant, or the residue is reacted with a chemical moiety to render the functional group inert.

United States Patent 4,713,287 describes magnetic recording media comprising a support having a thin ferromagnetic metal magnetic film thereon, a thin layer of a fluorinated polymer on the magnetic film, and a lubricating agent coated onto the polymer layer.

While prior disk lubricant systems have been generally satisfactory, the need remains for an improved disk lubricant system that will meet the ever growing requirements for DASD reliability, so as to satisfy customer reliability and long life expectations.

Without limitation thereto, the present invention is of special utility in providing a bifunctional, mixed phase, or mobile/immobile lubricant system for magnetic recording media, and more specifically for thin film magnetic recording disks of the hard or rigid type.

An object of the invention is to provide a magnetic recording disk comprising a thin film magnetic recording layer, a first functionalized lubricant constituent having a given backbone configuration and having at least one chemically active group that is bonded to the magnetic recording layer, to thereby provide a generally immobile lubricant constituent, and a second non functionalized lubricant constituent having a backbone configuration that is generally similar to the given backbone of the first lubricant constituent and having chemically inactive groups, the similar backbone being attached to the given backbone, to thereby provide a generally mobile lubricant constituent.

In an embodiment of the invention, the first lubricant constituent comprises a chemically active perfluoropolypropylene ether, and the second lubricant constituent comprises a chemically inactive perfluoropolypropylene ether. For example, the first lubricant constituent may comprise a thermally bonded monofunctionalized perfluoropolypropylene (PFPP) ether, and the second lubricant constituent may comprise a topically applied chemically inactive liquid PFPP material. More specifically the first lubricant constituent may comprise a linear perfluoropolypropylene ether having a chemically active phenyl ester end group, and the second lubricant constituent may comprise a linear perfluoropolypropylene ether material that is chemically inactive.

The lubricant system of this invention provides improved tribological performance over a wide range of environmental conditions, including conditions of high humidity, and in some cases may provide improved resistance to foreign materials or contaminants that may be outgassed from the components within the disk file or DASD unit in which the disks are an integral part.

As a result of the invention, the disk file designer is allowed to use a wider selection of read/write transducing head constructions, the transducing heads experience extended life in the DASD file, and the disk's data recording density can be increased due to the fact that the transducing heads can operate at a lower flying height.

The disk lubricant system of the present invention is based upon the selection of two lubricant molecules having identical, or generally similar, molecular backbone structures. The lubricant that is selected for use as the immobile or bonded lubricant constituent of the invention is a functionalized lubricant in that the molecule includes one or more active chemical groups. The lubricant that is selected for use as the mobile or unbonded lubricant layer is inactive in that it contains no reactive end groups.

In operation of the invention, the chemically active group or groups of the bonded lubricant constituent are bonded, for example by the application of heat, to the underlying recording layer, or perhaps to an optional carbon based layer that overlies and protects the recording layer. The molecular backbone of the mobile lubricant constituent attaches itself to the molecular backbone of the bonded lubricant constituent. However, this backbone-to-backbone attachment phenomenon is releasable with the expenditure of energy, such as the energy that is provided by the disk's data transducing head. In this way, the mobile lubricant constituent may move about the disk's surface, as necessary, when such energy is expended at the disk surface. Since the mobile lubricant constituent is generally chemically inert, the molecules of the mobile constituent do not coat the transducing head, or the like, but preferentially reattach to molecules of the bonded lubricant constituent.

With the disk lubricant system of the invention, it is required that the two lubricant constituents be of similar backbone type, but of different active/inactive chemical group types. This feature of the invention allows these two lubricant constituents to be selected to perform somewhat different functions within the composite disk lubricant system.

The lubricant material that is selected to provide the bonded molecules of this invention's bifunctional lubricant system provide functions such as attachment of the bifunctional system to the underlying disk surface, control of the humidity affected wear response of the lubricant system, minimization of lubricant spin off, and significantly contributes to the lubricity of the lubricant system, particularly when high molecular weight lubricant is used.

The lubricant material that is selected to provide the mobile or unbonded molecules of this invention's bifunctional lubricant system provide functions such as providing the bulk of the lubricant system's lubricity, control of head/disk stiction, minimization of lubricant spin off, and protection of the bonded lubricant molecules from factors such as temperature and humidity that may produce catalyzed unbonding of the bonded molecules.

While the two lubricant constituents of the invention provide different functional properties to the lubricant system, these two constituents are selected from molecular types having identical, or generally similar, molecular backbone structures, the bonded constituent preferably providing a functionalized molecule having at least one active chemical group, and the nonbonded constituent having only inactive chemical groups within the molecule.

In preferred embodiments of the invention, the immobile lubricant constituent is bonded onto the surface of the disk, as by the use of thermal bonding, UV bonding, X-ray bonding, and the like. The non-bonded lubricant constituent is then topically coated onto the bonded lubricant constituent.

In a preferred embodiment of the invention the bonded constituent comprised a PFPP ether with one or more reactive end groups. The chemically reactive end group or groups of the bonded constituent may comprise piperonyl, acidimide, isocyanate, phenyl ester, alcohol, carboxylic acid, or napthyl ester. The preferred chemically reactive end group is phenyl ester (the brand Demnum SP). The mobile constituent comprised perfluoropolypropylene ether (the brand Demnum S-100).

Without limitation thereto, the invention provides special utility in low cost DASD files where the file usually operates in environments of high humidity. In such environments, the invention operates to reduce head stiction, particularly when high humidity and/or long DASD rest periods are encountered.

These and other objects and advantages of the invention will be apparent to those of skill in the art upon reference to the following description, which description makes reference to the drawing.

FIG. 1 is a side section view of a portion of a rigid magnetic recording disk embodying the invention, and

FIG. 2 is similar side section view showing an idealized molecular representation of the bifunctional, mixed phase or mobile/immobile lubricant layer(s) of the invention, as these lubricant layer(s) appear on the top exposed surface of the carbon based overcoat layer of FIG. 1.

The present invention provides an improved lubricant film system on magnetic recording media, the film comprising a bonded or immobile lubricant constituent and a mobile lubricant constituent. Preferred embodiments of the invention provide such a mobile/immobile lubricant system for thin film magnetic recording disks that are of the so called hard or rigid type.

Disks of this type are typically used in a direct access storage device (DASD), and operate to store binary data of the type that is then used in conventional data processing and computing systems. The invention finds utility with any of the well known recording processes, such as for example longitudinal magnetic recording and vertical magnetic recording. When the magnetic recording media is in the form of a hard disk, maintaining a supply of lubricant at the disk/head transducing interface is especially critical to the mechanical reliability of the DASD file.

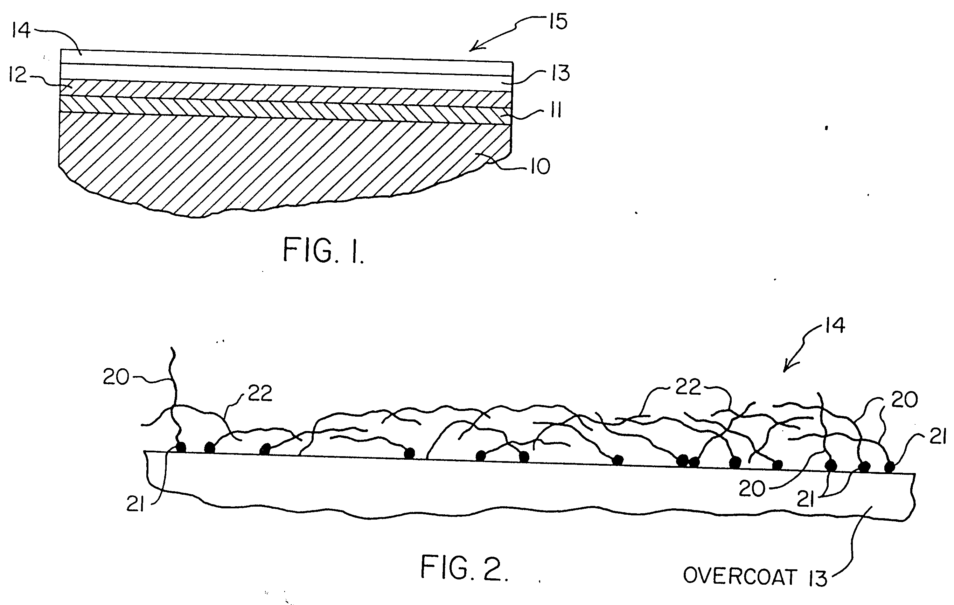

With reference to FIG. 1, in a preferred embodiment of the invention, a longitudinal magnetic recording disk 15 of the hard disk variety is constructed by depositing a thin magnetic recording film 12 on one or both planar and parallel surfaces of a disk shaped substrate member 10. Substrate member 10 is usually a flat aluminum disk that has been plated on both parallel and planar surfaces thereon with a protective NiP or Cr film 11, prior to depositing magnetic recording film 12 thereon. Substrate member 10 may also be formed from a nonmagnetic material such as glass, ceramic or a composite of glass and ceramic.

Magnetic recording film 12, whose composition is not critical to the invention, can be formed from a number of appropriate alloys, such as iron or cobalt based alloys. Magnetic films having utility herein include, for example, Co-Pt, Co-Cr, Co-Pt-Cr, Co-Ni-Cr, and Co-Ta-Cr films that are deposited by any appropriate process as is known by those skilled in the art, such processes including, for example, sputtering, vacuum evaporation and plating.

Disk 15 may or may not include a thin overcoat film 13 of carbon, or of another protective material, on the surface of magnetic recording film 12.

The manner of making disk 15 is well known to those of skill in the art, and for purposes of simplicity will not be described herein in detail.

FIG. 1 is a section view of only a portion of one side of such a 2-sided rigid magnetic recording disk 15, which disk portion includes an improved lubricant film system 14 in accordance with the invention. While the invention has general utility for use with many types of magnetic recording media, it is of special utility in the art of direct access storage devices (DASD) wherein rigid or hard magnetic recording disks are used to store digital data.

Preferably recording film 12 comprises a thin magnetic recording film that is vacuum deposited on protective film 11, as by sputtering, vapor deposition, ion plating or metal plating, for example.

While not critical to the invention, it is preferred that an optional carbon containing or carbon based overcoat film 13 be deposited on recording film 12.

The bifunctional lubricant system or film 14 of the invention is applied to the exposed surface of carbon based film 13. As will be appreciated by those skilled in the art, while film 14 is shown as an ideally continuous film, film 14 may contain small voids and/or relatively thin areas. These lubricant depleted areas are significantly diminished by operation of the mobile lubricant constituent of the invention, to be described.

More specifically, the disk's exposed surface (i.e. the exposed surface of magnetic recording film 12 or of optional film 13), is lubricated in accordance with the invention by first applying a lubricant constituent having a known backbone configuration and at least one chemically active group within its molecular structure, for example a monofunctional molecule having one active end group. This lubricant constituent is then bonded to the disk surface 12 or 13 by operation of its chemically active group(s), as by the application of an elevated temperature within an oven. This bonding operation or step provides the generally immobile lubricant constituent that is required by the invention. In addition, this bonding step renders the lubricant constituent thereafter generally chemically inactive.

In a preferred embodiment of the invention, the amount of the bonded lubricant constituent that is topically applied to the disk surface, prior to placing the disk in an elevated temperature, is controlled so that substantially no unbonded portion, or a controlled portion thereof remains on disk surface 12 or 13 after the above described bonding step has been completed. However, within the spirit and scope of the invention, any unbonded residual that may remain after the bonding step can be washed off of the disk surface, leaving only a bonded lubricant film thereon.

A second lubricant constituent is now topically applied to the bonded lubricant constituent. In accordance with the invention, this second lubricant constituent must have a molecular structure providing a backbone that is the same as, or is generally similar to, the backbone of the above mentioned bonded lubricant constituent, and the molecular structure of this second lubricant constituent must also contain only chemically inactive groups therein.

The bifunctional lubricant system or film 14 of the invention thus comprises (1) a chemically active constituent (see 20 in FIG. 2) whose chemical activity is used to tightly bond this constituent to the disk surface, and (2) a second chemically inactive constituent (see 22 in FIG. 2) that is attached to, but is removable from, the backbone of the bonded lubricant constituent.

This mobile lubricant constituent provides the major portion of the lubrication property of film 14. Since the mobile constituent is attached to the bonded constituent, spin off of film 14 is minimized, while at the same time allowing the mobile constituent to detach upon the bonded lubricant constituent upon the application of a force above a threshold value, so as to reduce head/disk wear and the like. In this way, lubricant depleted areas within film 14 are dynamically provided with mobile lubricant molecules as needed, as the mobile lubricant constituent moves about the surface 12 or 13 of the disk during data processing.

While the manner in which lubricant film system 14 is applied to disk 15 is not critical to the invention, in accordance with the general teaching of this invention disk 15 is dipped into a lubricant solution having a relatively low lubricant constituent concentration, and the disk is then withdrawn from the solution at a relatively slow rate, so as to provide a desired solution thickness on the disk surfaces, without producing streaking or unevenness of the solution on the disk surfaces.

For example, in a preferred embodiment disk 15 was dipped into a Fluorinert FC-72 brand (3-M Company) fluorocarbon solvent bath that contained about 6 grams per liter of the brand Demnum SP linear perfluoropolypropylene ether lubricant having a chemically active phynel ester end group. The disk was then withdrawn from this solution at a rate of about 1.8 mm per second. The disk was then baked in an oven at about 150 degrees C, for about 30 minutes, in order to bond this lubricant constituent to the disk.

After cooling the disk to room temperature, the disk was stripped of any residual unbonded lubricant. The disk was then dipped in a solution comprising the above mentioned Fluorinert brand solvent and about 0.9 grams per liter of the brand Demnum S-100 chemically inert perfluoropolypropylene ether lubricant. The disk was then withdrawn from this solution at a rate of about 1.8 mm per second.

In the resulting lubricant system 14, the thickness of the bonded lubricant constituent was about 10 angstroms, and the thickness of the mobile lubricant constituent measured about 7 angstroms.

FIG. 2 presents an idealized molecular showing of the bifunctional lubricant film system 14 of the invention, as this lubricant film appears on the top exposed surface of carbon based overcoat film 13. In this figure, reference numeral 20 identifies the chemically active lubricant constituent molecules of the invention, whereas reference numeral 22 identifies the chemically inactive lubricant constituent molecules of the invention.

In FIG. 2, the bonded, generally immobile, lubricant molecules 20 are shown as having a chemically reactive end group 21 of each molecule 20 bonded to the top surface of carbon film 13. In addition, the generally mobile lubricant molecules 22 are shown with the backbone of the majority of the mobile molecules 22 attached to the backbone of a bonded molecule 20 by way of intermolecular attraction.

The disk surface bonding that occurs at reactive end groups 21 operates to render molecules 20 immobile, whereas the backbone-to-backbone attachment of the two similar, or generally similar, molecular backbones operates to render molecules 22 releasably attached to bonded molecules 20. The attachment of molecules 22 to molecules 20 is releasable with the expenditure of a threshold amount of energy, such as the energy that may be provided when the disk's data transducing head (not shown) engages the disk's surface. In this way, the molecules 22 of the mobile lubricant constituent are allowed to move about the disk's surface whenever such an energy level is expended at the disk/head transducing interface. However, since molecules 22 are generally chemically inert, these molecules do not operate to coat the transducing head, or the like, when molecules 22 become detached from molecules 20, but rather the detached molecules 22 tend to move within film system 14, and preferentially reattach to the backbone of bonded molecules 20. In this way, undesirable effects such as head stiction are greatly reduced or eliminated over that which is found in duplex lubricant systems containing only chemically active lubricants.

It is to be understood by those skilled in the art that the first functionalized lubricant constituent molecules 20 of the invention are selected to provides a known backbone configuration, and to provide at least one chemically active group 21, the chemically active group or groups thereof being bonded to film 13, to provide the generally immobile lubricant constituent 20 of the invention. The second non functionalized lubricant constituent molecules 22 of the invention are then selected to provide a backbone configuration that is the same as, or is generally similar to, the known backbone configuration of bonded molecules 20. In addition, lubricant constituent molecules 22 are selected to have only chemically inactive groups within the molecule.

With the disk lubricant system 14 of the invention, it is required that the two lubricant constituents 20,22 be of similar backbone type, but of different active/inactive chemical end group types. The feature of the invention allows the two lubricant constituents 20,22 to be selected to perform somewhat different functions within the composite disk lubricant system 14, as stated above.

In preferred embodiments of the invention, the immobile lubricant constituent 20 is bonded onto the surface of film 13, as by the use of thermal bonding, UV bonding, X-ray bonding, and the like. The unbonded lubricant constituent 22 is then topically coated onto the bonded lubricant constituent 20.

Without limitation thereto, lubricant constituent molecules 20,22 are both of a high molecular weight as compared to the contaminant molecules that are generated by operation of the DASD unit, bonded molecules 20 being of a molecular weight of about 4,000, and mobile molecules 22 being of a molecular weight of about 6,000 to about 10,000.

As is apparent from the above description of preferred embodiments of the invention, the lubricant system of the invention requires (1) a first chemically active or functionalized lubricant constituent that acts as an immobile or bonded constituent, and (2) a second chemically inactive or non functionalized lubricant constituent that acts as a mobile lubricant constituent, wherein the molecular backbone of these two constituents are generally similar, such that (3) molecular backbone attraction causes the mobile constituent to preferentially attached to the immobile constituent.

In general, these two constituents may comprise fluorinated lubricants such as polyethers wherein only the immobile constituent is provided with one or more chemically active groups.

An example is the use of a chemically active perfluoropolypropylene ether as the immobile constituent, and the use of a chemically inactive perfluoropolypropylene ether as the mobile constituent.

In addition, hydrofluoropolypropylene ethers can be used, wherein a chemically active member is used as the immobile constituent, and a chemically inactive member is used as the mobile constituent.

Also, perfluoropolyisopropylene ethers and hydrofluoropolyisopropylene ethers can be used, wherein only the immobile constituent is provided with one or more chemically active groups.

More specifically, the Demnum SP brand that comprises a linear perfluoropolypropylene ether backbone having a chemically active phenyl ester end group was used as the immobile constituent, and the Demnum S-100 brand of chemically inactive linear perfluoropolypropylene ether was used as the mobile constituent.

The Fomblin and Krytox brands of perfluoropolyisopropylene ethers can also be used, wherein a chemically active brand member is used as the immobile constituent, and a chemically inactive brand member is used as the mobile constituent.

The invention has been described in detail while making reference to various embodiments thereof. It is appreciated that those skilled in the art will readily visualize yet other embodiments that are within the spirit and scope of the invention.

## Claims

1. Magnetic recording media, comprising;
   a magnetic recording layer,
   a first functionalized lubricant constituent having a first molecular structure comprising a given backbone configuration, and having at least one chemically active group within said first molecular structure, said at least one chemically active group being bonded to said magnetic recording layer, to thereby provide a generally immobile lubricant constituent, and
   a second non functionalized lubricant constituent having a second molecular structure comprising a backbone that is generally similar to said given backbone, and having chemically inactive groups within said second molecular structure, said similar backbone being attached to said given backbone, to thereby provide a generally mobile lubricant constituent.

2. The magnetic recording media of claim 1 wherein said magnetic recording layer comprises a thin film.

3. The magnetic recording media of claim 2 wherein said first lubricant constituent is thermal bonded to said thin film.

4. The magnetic recording media of claim 1 wherein said first lubricant constituent is selected from the group, (1) chemically active perfluoropolypropylene ether, (2) chemically active hydrofluoropolypropylene ether, (3) chemically active perfluoropolyisopropylene ether, and (4) chemically active hydrofluoropolyisopropylene ether, and

wherein said second lubricant constituent is selected from the group, (1) chemically inactive perfluoropolypropylene ether, (2) chemically inactive hydrofluoropolypropylene ether, (3) chemically inactive perfluoropolyisopropylene ether, and (4) chemically inactive hydrofluoropolyisopropylene ether.

5. The magnetic recording media of claim 4 wherein said bonding is accomplished by subjecting a liquid film of said first lubricant constituent to heat radiation, UV radiation, X-ray radiation, and the like.

6. The magnetic recording media of claim 1 wherein said first lubricant constituent comprises a linear perfluoropolypropylene ether backbone having a chemically active phenyl ester end group, and wherein said second lubricant constituent comprises a chemically inactive linear perfluoropolypropylene ether.

7. The magnetic recording media of claim 1 wherein said generally immobile lubricant constituent comprises a film about 10 angstroms thick of a molecular weight about 4,000, and wherein said generally mobile lubricant constituent comprises a film about 7 angstroms thick of a molecular weight in the range of from about 6,000 to about 10,000.

8. The magnetic recording media of claim 1, wherein said first lubricant constituent is a film about 10 angstroms thick and of a molecular weight about 4,000, comprising a linear perfluoropolypropylene ether backbone having a chemically active phenyl ester end group,

wherein said second lubricant constituent comprises a chemically inactive linear perfluoropolypropylene ether film about 7 angstroms thick of a molecular weight in the range of from about 6,000 to about 10,000, and

wherein said magnetic recording layer is a thin film selected from iron and/or cobalt based alloys.

9. A thin film magnetic recording disk including a head to disk lubricant system, said disk comprising; a disk shaped nonmagnetic substrate member, a thin film of the magnetic recording media according to anyone of claims 1-8 on a surface of said substrate member.

10. The magnetic recording disk of claim 9 wherein said nonmagnetic substrate member comprises a rigid aluminum disk having a protective nonmagnetic film thereon, said protective film being located intermediate said aluminum disk and said recording film.

11. The magnetic recording disk of claim 10 wherein said protective film is selected from the group NiP alloy and Cr based alloy.

12. The magnetic recording disk of claim 11 wherein said recording film is selected from the group iron based alloys and cobalt based alloys.

13. A method for providing a lubricant system on magnetic recording media, comprising the steps of; providing a nonmagnetic substrate member having a magnetic recording film thereon,,

coating said recording film with a chemically active lubricant constituent having a molecular structure comprising a backbone and at least one chemically active group,

subjecting said chemically active lubricant constituent to a chemically activating physical phenomenon, so as to bond said at least one chemically active group to said recording film, to thereby provide a generally immobile bonded lubricant constituent on said recording film, and

coating said bonded lubricant constituent with a chemically inert lubricant constituent having a molecular structure including a backbone that is generally similar to the backbone of said chemically active lubricant constituent,

the backbone of said chemically inert lubricant constituent being removably bonded to the backbone of said chemically active lubricant constituent by virtue of intermolecular attraction, to thereby provide a generally mobile lubricant constituent on said recording film.

14. The method of claim 13 wherein said chemically active lubricant constituent is selected from the group, (1) chemically active perfluoropolypropylene ether, (2) chemically active hydrofluoropolypropylene ether, (3) chemically active perfluoropolyisopropylene ether, and (4) chemically active hydrofluoropolyisopropylene ether, and

wherein said second chemically inert constituent is selected from the group, (1) chemically inert perfluoropolypropylene ether, (2) chemically inert hydrofluoropolypropylene ether, (3) chemically inert perfluoropolyisopropylene ether, and (4) chemically inert hydrofluoropolyisopropylene ether.

15. The method of claim 13, wherein said chemically active lubricant constituent comprises a film of a molecular weight about 4,000, having molecules of linear perfluoropolypropylene ether backbone having a chemically active phenyl ester end group,
wherein said chemically inert lubricant constituent comprises a chemically inert linear perfluoropolypropylene ether film of a molecular weight in the range of from about 6,000 to about 10,000, and
wherein said magnetic recording film is selected from iron and/or cobalt based alloys.

16. The method of claim 5, wherein said chemically active lubricant constituent comprises a film about 10 angstroms thick, and
wherein said chemically inert lubricant constituent comprises a film about 7 angstroms thick.

FIG. I.

FIG. 2.

OVERCOAT 13

EP 0 505 303 A1

**European Patent Office**

## EUROPEAN SEARCH REPORT

Application Number

EP 92 48 0021

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | US-A-4 642 246 (ROBERT A. JANSSEN ET AL.) 10 February 1987 | 1,4,5,9, 13,14 | G11B5/72 |
| A | | 2,3,7, 15,16 | |
| | * column 1, line 25 - line 34 * <br> * column 2, line 55 - column 3, line 33 * <br> * claims 6,7 * <br> --- | | |
| X | WO-A-8 701 501 (MEMOREX CORPORATION) 12 March 1987 <br> * page 4, line 8 - line 26 * <br> * page 4, line 27 - line 31 * <br> * claims 1-4 * <br> --- | 1 | |
| A | EP-A-0 280 438 (KOMAG, INC.) 31 August 1988 <br> * claims 1-3; figure 1 * <br> ----- | 9-12 | |

TECHNICAL FIELDS SEARCHED (Int. Cl.5)

G11B

The present search report has been drawn up for all claims

| Place of search | Date of completion of the search | Examiner |
|---|---|---|
| THE HAGUE | 14 JULY 1992 | KLOCKE S. |